# EUROPEAN PATENT SPECIFICATION

(11) **EP 0 347 674 B1**
(45) Date of publication and mention of the grant of the patent: **25.08.1993**
(21) Application number: 89110514.0
(22) Date of filing: 10.06.1989
(51) Int. Cl.: G21C 3/00, G21C 15/02

(54) **Fuel assembly for a pressurized water reactor**
Brennelementbündel für einen Druckwasserreaktor
Assemblage combustible pour un réacteur à eau sous pression

(30) Priority: 20.06.1988 SE 8802305
(43) Date of publication of application: 27.12.1989
(73) Proprietor: ABB ATOM AB, S-721 83 Västeras (SE)
(72) Inventor: Nylund, Olov, 720 17 Västeras (SE)
(74) Representative: Boecker, Joachim, Dr.-Ing.

(56) References cited:
- DE-A- 3 424 110
- GB-A- 1 169 868
- US-A- 3 844 888
- US-A- 4 056 440
- US-A- 4 416 852

## Description

The present invention relates to a fuel assembly for a pressurized water reactor (PWR) according to the precharacterising part of claim 1. More particularly, it relates to means for flow control of cooling water in the fuel assembly.

The fuel core of a pressurized water reactor substantially consists of fuel rods kept together in bundles in fuel assemblies. During operation, the fuel rods are cooled, the heat being dissipated by cooling water flowing through the bundles. The fuel rods are kept together and are fix in the fuel assembly by spacers.

From US-A-4,416,852 it is previously known to achieve improved cooling during normal operation in a nuclear reactor of boiling type. The US-A-4,416,852 shows and describes how the spacers in a fuel box are arranged as sub-spacers, each of which occupies only part of the cross section of the fuel assembly. Groups of sub-spacers are arranged along the fuel assembly separated from each other and essentially acting in different quadrants. In a boiling reactor, however, the bundle of fuel rods retained by spacers is surrounded by a casing, in the above-mentioned US-patent designated 1'. The spacers in the fuel box rest against the casing and when the fuel assemblies are situated in the core of the boiling reactor, the casings of the various fuel assemblies, in turn, rest against each other. Also with the sub-spacers shown in the US-A-4,416,852, a stable arrangement of fuel rods in the core is achieved.

The afore-mentioned arrangement of sub-spacers is not suitable in a pressurized water reactor. In such a reactor the fuel assemblies have no casing, and since the known sub-spacers only surround part of the bundle, the abutment against a sub-spacer in an adjacent bundle will, of course, be limited to a corresponding extent. The result is that this type of sub-spacer does not provide good support of the fuel rods in a pressurized water reactor.

According to another known embodiment, disclosed in DE-A-3 424 110, it is proposed that at certain suitable places in the lattice of the spacers, which here extend across the entire fuel rod bundle, so-called springs and burls be removed from the lattice squares. Admittedly, the fuel rod runs through these lattice squares, but the flow resistance to the cooling water through the core is reduced at these places, however not to an entirely satisfactory extent.

The invention aims at developing a fuel assembly for a pressurized water reactor of the above-mentioned kind in which the spacers contribute only moderately to the the increase of flow resistance through the bundle and in which the spacers simultaneously may contribute to achieve a stable mutual positioning of the many fuel assemblies arranged in the reactor core.

To achieve this aim the invention suggests a according to the introductory part of claim 1, which is characterized by the features of the characterizing part of claim 1.

Further developments of the invention are characterized by the features of the additional claims.

According to the invention outer and inner sub-spacers are arranged, preferably alternately, along the bundle of fuel rods. The outer sub-spacers are made frame-shaped with an external dimension somewhat larger than the external dimension of the fuel rod bundle and serve as retaining means for the peripherally arranged fuel rods in the bundle. Between adjacent outer sub-spacers, at least one inner or central sub-spacer is arranged. This or these sub-spacers substantially retain only those fuel rods and control rod guide tubes which, in the central part of the bundle, are surrounded but not retained by the frame-shaped outer sub-spacers.

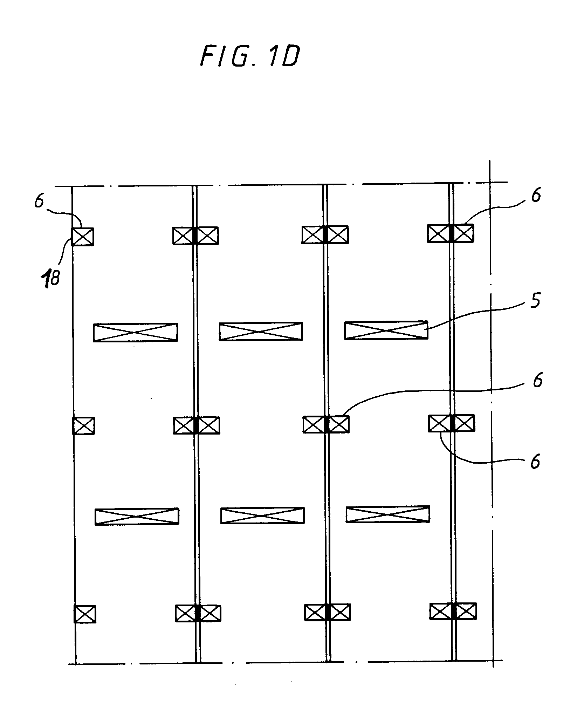

Since the outer portion of the frame-shaped sub-spacers surrounds the outer fuel rods in a fuel assembly, these spacers will form a laterally protruding elevation 18 around the fuel assembly (see Fig. 1D). When the fuel assemblies are inserted into the core, they will support each other at these elevations 18, thus obtaining greater stability than with the known embodiment described above.

In relation to the device according to DE-A-3 424 110, an improvement is also obtained in that not only springs and burls are removed from certain lattice fields or squares but that entire portions of the lattice, centrally or peripherally, are omitted. This results in additional reduction of the flow resistance through the fuel assembly.

To further improve the stability in the bundle, the spacers with their grid-forming lattice fields are dimensioned such that one or more peripheral squares in the lattice of the inner sub-spacer align vertically with corresponding inner squares in the lattice of the outer sub-spacer. Through one or more such rows of vertically aligned lattice squares extends/extend one or more control rod guide tube/tubes, thereby connecting outer and inner sub-spacers. An additional, somewhat increased stability can be obtained by providing the outer sub-spacer with an inner cross-connection, although this increases the flow resistance somewhat.

By way of example, the invention will now be described in greater detail with reference to the accompanying drawings showing, in simplified form, in
- Figures 1A: a longitudinal section of a first embodiment of a fuel assembly according to the invention with central and peripheral sub-spacers,
- Figures 1B: a cross-section of a central sub-spacer taken along line I-I in Figure 1A,
- Figures 1C: a cross section of a peripheral sub-spacer taken along line II-II in Figure 1A,
- Figure 1D: a vertical section through a number of fuel assemblies arranged side by side in a reactor core,
- Figures 2A to 2C,: in the same fashion as in Figures 1A to 1C, a second embodiment of a fuel assembly according to the invention,
- Figures 3A to 3C,: in the same fashion as in Figures 1A to 1C, a third embodiment of a fuel assembly according to the invention,
- Figures 4A to 4C,: in the same fashion as in Figures 1A to 1C, a fourth embodiment of a fuel assembly according to the invention with central sub-spacers each being arranged in a respective quadrant.

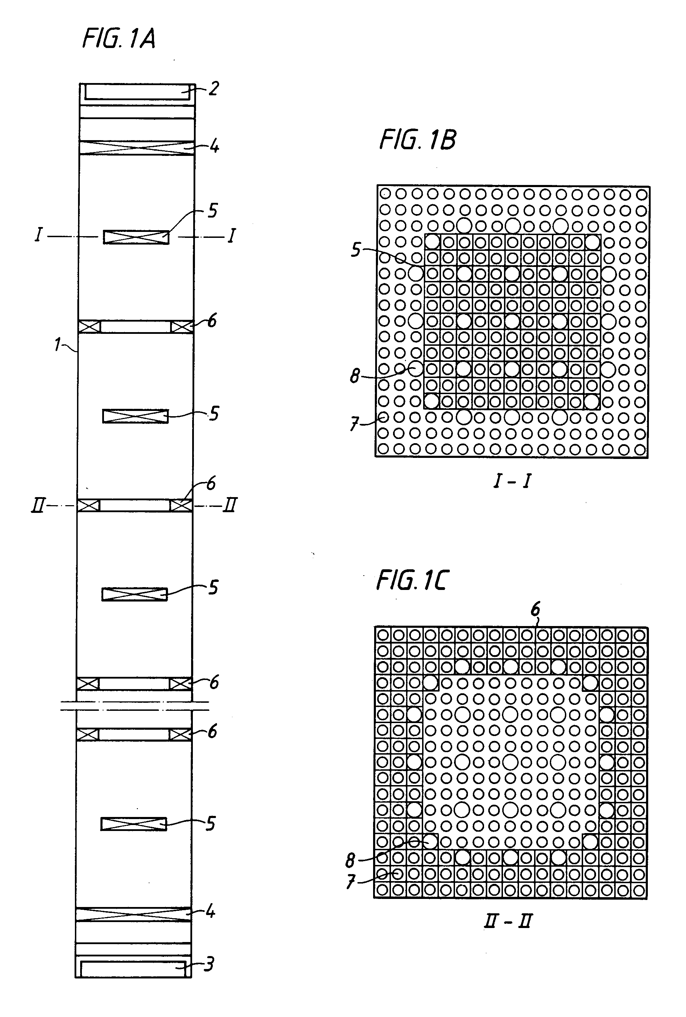

Figure 1A to 1C show, in simplified form, one longitudinal section and two cross-sections of a fuel assembly for a nuclear reactor. A fuel assembly 1 comprises a top support plate 2, a bottom support plate 3, spacers and fuel rods, the latter not being shown in Figure 1A. To retain and fix the fuel rods, several spacers are arranged in the fuel assembly 1. The spacers substantially consist of structural elements which form outer and inner lattices and, in a cross-section, a grid of quadratic fields. The structural elements of the spacers support spring elements so that a fuel rod or a control rod guide tube can be fixed in one square of the lattice. In the fuel assembly 1, a normal spacer 4 that covers the entire cross-section of the fuel assembly is placed below the top support plate 2 and above the bottom support plate 3. Between these uppermost and lowermost spacers 4, two different kinds of sub-spacers 5, 6 are alternately positioned. The cross sectional views 1B and 1C show the arrangement of these sub-spacers and how fuel rods 7 and control rod guide tubes 8 are arranged in the fuel assembly and the sub-spacers. Figure 1B shows how the inner sub-spacer 5 is located in relation to the fuel rods 7 and control rod guide tubes 8. The fuel assembly 1 displays a 17x17 lattice accommodating 264 fuel rods 7, 24 control rod guide tubes 8, and one instrument tube. The control rod guide tubes 8 are used here to fix the spacers and the sub-spacers. The inner sub-spacer 5 displays an 11x11 lattice formed by the structural elements of the spacer and may be connected to the control rod guide tubes 8 in their corner positions. Figure 1C shows how the outer, frame-shaped sub-spacer 6 is located in relation to the fuel rods 7 and control rod guide tubes 8. The outer sub-spacer substantially consists of a surrounding grid formed by the structural elements with a width of three squares. Also the outer sub-spacer 6 may be connected to the control rod guide tubes 8 inside the inner corner positions of the sub-spacer.

Figure 1D shows how the fuel assemblies in the core support each other at the elevation 18 of the outer sub-spacers, thus obtaining satisfactory stability.

With the location of the sub-spacers in the fuel assemblies as described above, a cross-flow of the cooling water flow will be created under operation of the reactor. This cross flow will alternately act between the inner and the outer regions in the fuel assembly, which provides short distances between turbulence regions arising after each spacer. The cross flow and the turbulences created can be expected to lead to a high DNB margin (DNB = departure from nucleate boiling, and a low pressure fall and will contribute to an improved mixing of the cooling water and hence an improved cooling of the fuel rods.

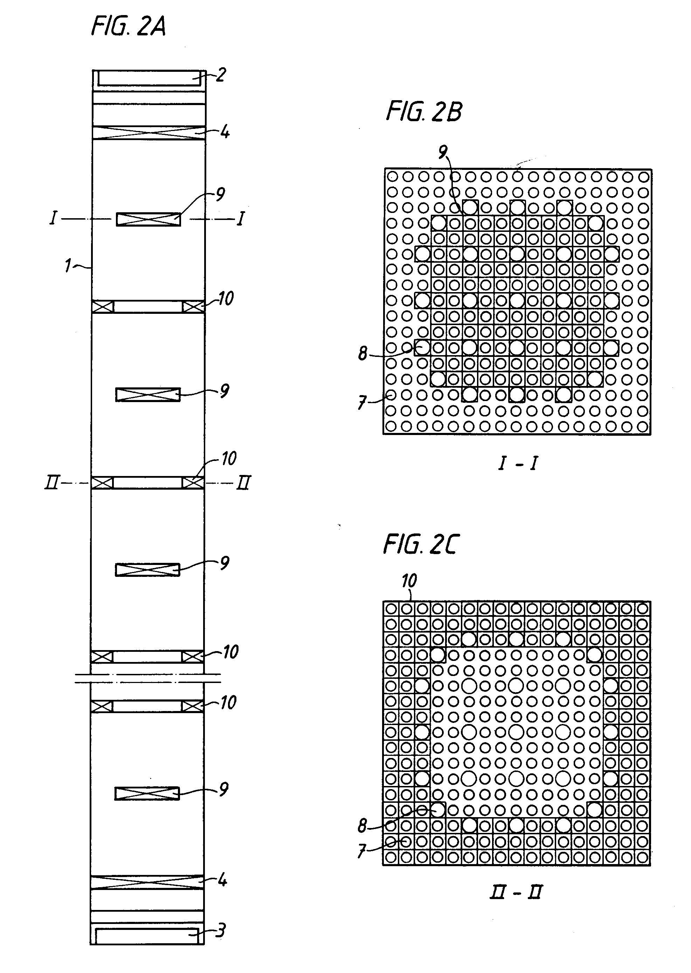

Figure 2A to 2C show, in simplified form, one longitudinal section and two cross sections of a fuel assembly of a pressurized water reactor. The fuel assembly in Figure 2 comprises a top support plate 2, a bottom support plate 3, spacers 4 and sub-spacers 9, 10. Between the upper and lower spacers two different kinds of sub-spacers 9, 10 are alternately positioned. The cross sectional views 2B and 2C show how the fuel rods 7 and the control rod guide tubes 8 are arranged in the fuel assembly and how the sub-spacers are positioned. Figure 2B shows how the inner sub-spacer is located in relation to fuel assemblies 7 and control rod guide tubes 8. The inner sub-spacer 9 substantially displays an 11x11 grid and is here connected to control rod guide tubes outside the square grid. Figure 2C shows how the outer sub-spacer 10 is located in relation to fuel rods and control rod guide tubes. The outer sub-spacer 10 substantially consists of a surrounding grid frame with a frame width of three grid squares and may be connected to the control rod guide tubes inside the inner corner positions of the outer sub-spacer.

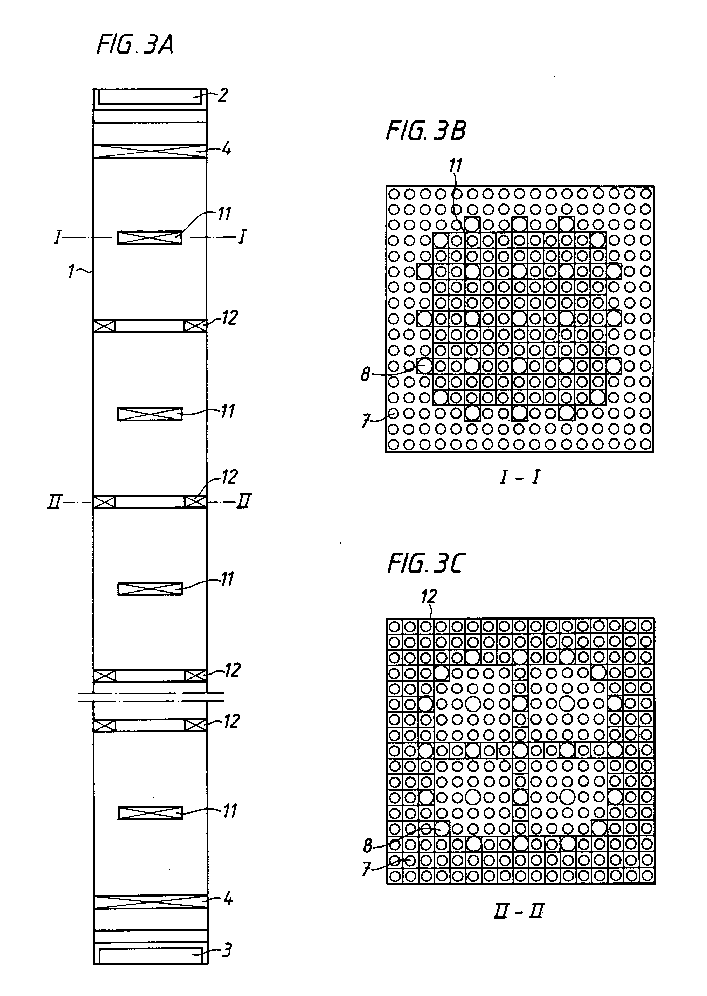

Figure 3A to 3C show, in simplified form, one longitudinal section and two cross sections of a fuel assembly for a nuclear reactor. The fuel assembly in Figure 2A comprises a top support plate 2, a bottom support plate 3, spacers 4 and sub-spacer 11, 12. The cross sectional views 3B and 3C show additional examples of how the sub-spacers may be designed. The inner sub-spacer 11 corresponds to the inner sub-spacer in the preceding example. However, the outer sub-spacer 12 has here been supplemented by structural elements forming a cruciform portion, leaving four open areas between the peripheral structure and the cruciform portion. This type of outer sub-spacers 12 will be more resistant to transverse forces against the fuel assembly. Also in this case, sub-spacers may be connected to the control rod guide tubes in their corner positions.

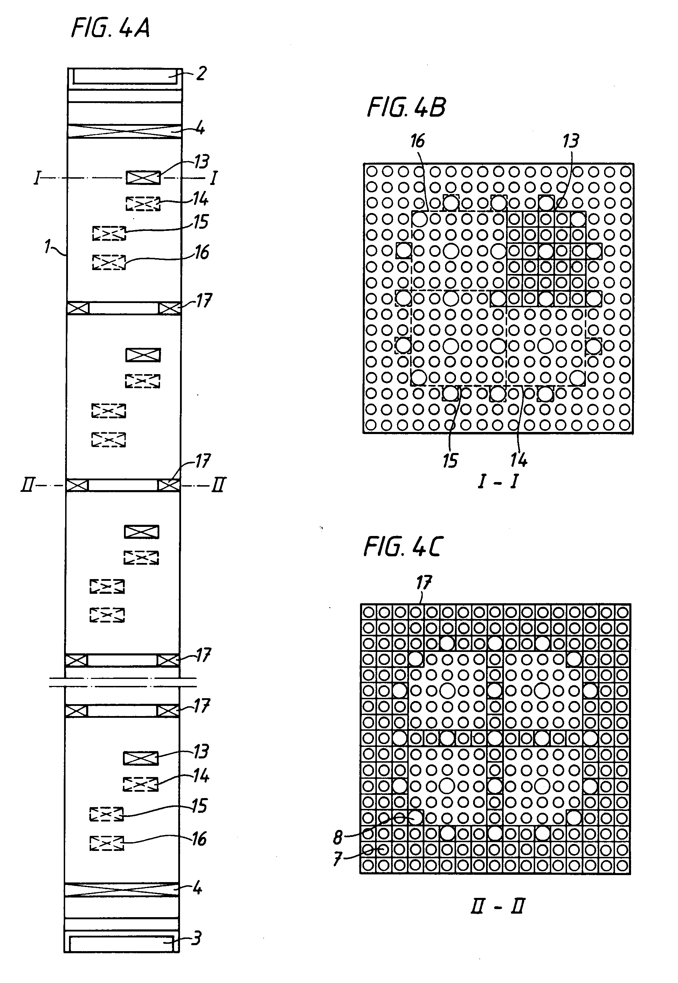

Figure 4A to 4C again show, in simplified form, one longitudinal section and two cross sections of a fuel assembly for a nuclear reactor. The fuel assembly in Figure 4A comprises a top support plate 2, a bottom support plate 3, spacers 4 and sub-spacer 13, 17. The cross-sectional views show in more detail how the sub-spacers are designed. The inner sub-spacers 13-16 are divided and arranged to act in four different quadrants, separated from each other, along the fuel assembly between two adjacent outer spacers 17. The outer spacers 17 may be formed in accordance with any of the preceding examples, for example, with a central cruciform. In addition to the creation of a cross flow, as mentioned above, the inner central sub-spacers will contribute to the cross flow also becoming rotating, which to an even higher degree may contribute to improve the cooling of the fuel rods.

The normal design is for the spacers to be fixed to the control rod guide tubes. It must be considered important that the outer and the inner sub-spacers are partly fixed to the same control rod guide tubes to achieve mechanical stability. It must also be considered important that the outer spacers are situated in their normal spacer positions to provide support against the spacers on the adjacent fuel assemblies standing in the core.

## Claims

1. Fuel assembly (1) for a pressurized water reactor comprising a top support (2) and a bottom support (3), a number of elongated fuel rods (7) arranged in a bundle between said top and bottom supports, and a number of control rod guide tubes (8) also arranged in the bundle, said bundle being retained by a number of spacers (5,6; 9,10; 11,12; 13,17) of different types, **characterized** in that said spacers comprise outer and inner sub-spacers (5, 6) alternately arranged along the bundle, said outer sub-spacers (6) being frame-shaped with an external dimension somewhat larger than the external dimension of the bundle and adapted to serve as retaining means for peripherally arranged fuel rods in the bundle, and that between adjacent outer sub-spacers (6), there is arranged at least one inner sub-spacer (5), keeping together substantially only those fuel rods and control rod guide tubes which, in the central part of the bundle, freely pass through that cross-sectional area which is surrounded by the frame-shaped outer sub-spacers (6).

2. Fuel assembly according to claim 1, **characterized** in that the spacers consist of structural elements forming a square lattice, whereby one or more peripheral square/squares in the lattice of an inner sub-spacer (5) is/are arranged so as to align with corresponding inner squares in the lattice of the outer sub-spacer (6) and that one or more control rod guide tubes pass through said aligned lattice squares, thereby connecting outer and inner sub-spacers (5, 6) with one another.

3. Fuel assembly according to claims 1 or 2, **characterized** in that inner sub-spacers (13, 14, 15, 16) are divided in four separate parts and are arranged one after the other in four different quadrants between two adjacent outer sub-spacers (17) such, that also a rotating cross flow is created in the fuel assembly (1).

4. Fuel assembly according to any of the preceding claims, **characterized** in that the outer sub-spacers (12, 17) are provided with an inner cross connection consisting of structural and spring elements.

## Patentansprüche

1. Brennelement (1) für einen Druckwasserreaktor mit einem Kopfstück (2) und einem Fußstück (3), mit einer Vielzahl langgestreckter Brennstäbe (7), die in einem Bündel zwischen dem genannten Kopfstück und Fußstück angeordnet sind, und mit einer Anzahl von Steuerstabführungsrohren (8), die ebenfalls in dem Bündel angeordnet sind, wobei das Bündel durch Abstandshalter (5,6; 9,10; 11,12; 13,17) verschiedener Art in seiner Lage gehalten wird, **dadurch gekennzeichnet**, daß zu den genannten Abstandshaltern äußere und innere Teilabstandshalter (5,6) gehören, die abwechselnd entlang dem Bündel angeordnet sind, daß die äußeren Teilabstandshalter (6) rahmenförmig ausgebildet sind mit äußeren Abmessungen, die etwas größer als die äußeren Abmessungen des Bündels sind und die als Halteeinrichtung für peripher angeordnete Brennstäbe des Bündels dienen, und daß zwischen benachbarten äußeren Teilabstandshaltern (6) mindestens ein innerer Teilabstandshalter (5) angeordnet ist, der im wesentlichen nur diejenigen Brennstäbe und Steuerstabführungsrohre zusammenhält, die im zentralen Bereich des Bündels sich frei durch die Querschnittsfläche erstrecken, welche von den rahmenförmigen äußeren Teilabstandshalter (6) umschlossen wird.

2. Brennelement nach Anspruch 1, **dadurch gekennzeichnet**, daß die Abstandshalter aus Bauelementen bestehen, welche ein quadratisches Gitter bilden, wobei ein oder mehrere periphere Quadrate des Gitters eines inneren Teilabstandshalters (5) derart angeordnet ist/sind, daß sie mit entsprechenden inneren Quadraten des Gitters des äußeren Teilabstandshalters (6) fluchten, und daß ein oder mehrere Steuerstabführungsrohre sich durch diese fluchtenden Quadrate erstrecken und dadurch äußere und innere Teilabstandshalter (5,6) miteinander verbinden.

3. Brennelement nach Anspruch 1 oder 2, **dadurch gekennzeichnet**, daß innere Teilabstandshalter (13, 14, 15, 16) in vier separate Teile unterteilt sind und hintereinander in vier verschiedenen Quadranten zwischen zwei benachbarten äußeren Teilabstandshaltern (17) derart angeordnet sind, daß auch ein rotierender Querfluß im Brennelement (1) erzeugt wird.

4. Brennelement nach einem der vorhergehenden Ansprüche, **dadurch gekennzeichnet**, daß die äußeren Teilabstandshalter (12,17) eine innere kreuzförmige Verbindung aufweisen, die aus tragenden Bauelementen und Federelementen bestehen.

## Revendications

1. Assemblage combustible (1) pour un réacteur à eau sous pression, comprenant un support (2) supérieur et un support (3) inférieur, un certain nombre de crayons combustibles (7) oblongs disposés suivant un faisceau entre les supports supérieur et inférieur, et un certain nombre de tubes-guides à barre de contrôle disposés également dans le faisceau, ce faisceau étant maintenu par un certain nombre d'entretoises (5,6; 9,10; 11,12; 13,17) de types différents, caractérisé en ce que les entretoises comprennent des sous-entretoises (5,6) extérieures et intérieures disposées en alternance le long du faisceau, les sous-entretoises (6) extérieures étant conformées en cadre d'une dimension extérieure un peu plus grande que la dimension extérieure du faisceau, et étant agencées de manière à servir de moyens de retenue de crayons combustibles périphériques du faisceau, et en ce que, entre des sous-entretoises (6) extérieures adjacentes, il est prévu au moins une sous-entretoise (5) intérieure maintenant ensemble sensiblement seulement les crayons combustibles et les tubes-guides de barre de contrôle qui, dans la partie centrale du faisceau, passent librement à travers la surface de section transversale qui est entourée par les sous-entretoises (6) extérieures conformées en cadre.

2. Assemblage combustible suivant la revendication 1, caractérisé en ce que les entretoises consistent en éléments de structure formant un réseau de carrés, un carré à la périphérie ou plusieurs carrés à la périphérie du réseau d'une sous-entretoise (5) intérieure étant disposés de manière à être alignés avec des carrés intérieurs correspondants du réseau de la sous-entretoise (6) extérieure, et en ce qu'un tube-guide de barre de contrôle ou plusieurs tubes-guides de barre de contrôle passent à travers ces carrés alignés de réseau, en reliant ainsi des sous-entretoises (5,6) extérieure et intérieure l'une à l'autre.

3. Assemblage combustible suivant la revendication 1 ou 2, caractérisé en ce que des sous-entretoises (13,14,15,16) intérieures sont subdivisées en quatre parties distinctes et sont disposées l'une après l'autre dans quatre quadrants différents, entre deux sous-entretoises (17) extérieures adjacentes, de manière à créer également un écoulement tournant transversal dans l'assemblage combustible (1).

4. Assemblage combustible suivant l'une quelconque des revendications précédentes, caractérisé en ce que les sous-entretoises (12,17) extérieures sont munies d'une liaison intérieure transversale consistant en éléments structuraux et en éléments élastiques.
